Europäisches Patentamt

European Patent Office

Office européen des brevets

(19)

(11) **EP 1 124 112 A2**

(12) **EUROPEAN PATENT APPLICATION**

(43) Date of publication:
**16.08.2001 Bulletin 2001/33**

(51) Int Cl.[7]: **G01D 5/353**

(21) Application number: **01103233.1**

(22) Date of filing: **12.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.02.2000 JP 2000033045**

(71) Applicants:
• **NTT Advanced Technology Corporation Tokyo (JP)**
• **Tokyo Sokki Kenkyujo Co., Ltd. Shinagawa-ku Tokyo (JP)**

(72) Inventors:
• **Sugai, Eiichi, c/o NTT Advanced Technology Corp. Shinjuku-ku, Tokyo (JP)**

• **Watabe, Kiyoaki, c/o Tokyo Sokki Kenkyujo Co. Ltd. Shinagawa-ku, Tokyo (JP)**
• **Yamaga, Kazunori, c/o Tokyo Sokki Kenkyujo Co.Ltd. Shinagawa-ku, Tokyo (JP)**
• **Fujita, Seiichi, c/o TOA SOKKI Co., Ltd. Yokohama-shi, Kanagawa (JP)**

(74) Representative:
**von Samson-Himmelstjerna, Friedrich R., Dipl.-Phys. et al
SAMSON & PARTNER
Widenmayerstrasse 5
80538 München (DE)**

(54) **Optical fiber sensor**

(57) In a detection section using a fiber Bragg grating (FBG), both ends of the FBG are protected with resin coating and a coated part is adhered or mechanically clamped to fixed parts. A spring or a lever or both of these are connected to one end of this fixed part. This is used as a detection section to convert a variation of a physical quantity such as displacement, weight, pressure or acceleration applied to between the fixed parts to a variation of a reflected wavelength or a transmitted wavelength from a fiber Bragg grating and to output the variation of the reflected wavelength and transmitted wavelength.

FIG. 1

**Description**

Background of the Invention

The present invention relates to an optical fiber sensor for detecting a physical quantity of displacement, weight, pressure and acceleration, or the like.

As disclosed in the Japanese Patent Laid-Open No. 2000-111319, the development of a strain sensor or temperature sensor using a fiber type detection element called "fiber Bragg grating (FBG)" is recently being carried forward.. These sensors take advantage of the fact that a grating (diffraction grating) is created in the traveling direction of the incident light and when the pitch of the grating written in an optical fiber is changed by strain or temperature, the peak wavelength of the light braggreflected from the grating changes according to the change or the spectrum of the light passing through the grating changes (the central wavelength of the dip light changes).

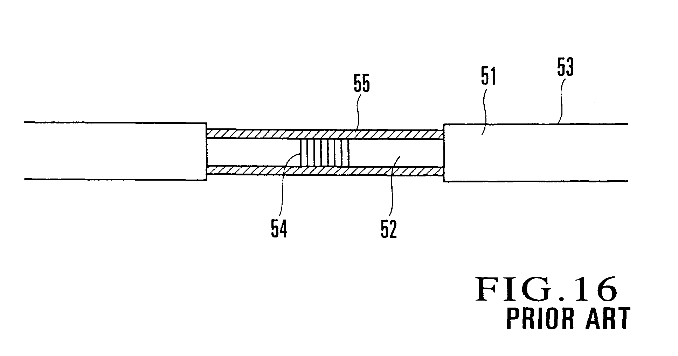

Fig. 16 is a partial cross-sectional view showing a configuration of a conventional optical fiber sensor. In Fig. 16, reference numeral 51 denotes an optical fiber core wire made up of an optical fiber 52 such as a silica glass based optical fiber provided with a coating 53 of UV-cured epoxy acrylate, etc. Part of the coating 53 of the optical fiber core wire 51 is stripped over a length of 1 cm to 4 cm where the interior of the optical fiber 52 is exposed. In the exposed optical fiber 52, fiber Bragg grating (hereafter fiber grating) 54 is written and the surface thereof is provided with recoating 55 made of UV-cured epoxy acrylate. The reason that the recoating 55 made of UV-cured epoxy acrylate is used is that optical fiber core wires with a coating of UV-cured epoxy acrylate are widely used and it is easy to provide coating, etc.

In order to use this fiber grating 54 to detect physical quantities as an optical fiber sensor, it is conceivable to fix the part of the fiber grating 54 to the detection location of an object to be measured using resin such as epoxy without peeling off the UV-cured epoxy acrylate coating.

However, most of the general UV-cured epoxy acrylate used here is of a low-resistant and creep-provoking material. Thus, if the coated UV-cured epoxy acrylate is pasted to the detection location, the resin itself would provoke creep, preventing a physical quantity such as displacement, weight, pressure, or acceleration from being directly converted to expansion/contraction of a fiber grating, that is, strain , causing a problem of reducing the accuracy of detecting physical quantities.

As alternative means, without recoating the fiber grating 54, or by removing the recoating part again with the optical fiber 52 exposed, the part of the fiber Bragg grating 54 is pushed against the detection location of the object to be measured and adhered and fixed thereto using resin such as epoxy. However, stripping the optical fiber 52 of the UN-hardened resin, exposing quartz glass, which is the material of the optical fiber 52, and pasting it to the detection location would produce a problem of causing scars and micro cracks on the quartz glass and increasing the probability of rupturing the optical fiber 52.

On the other hand, it is also conceivable to use the coating 55 made of thermo-setting resin for recoating . Using thermo-setting resin as the recoating material of the surface of the optical fiber 52 in which the grating 54 is written makes it possible to improve heat resistance and abrasion resistance, etc. This can solve the problem that resin itself will provoke creep, reducing the accuracy of detecting physical quantities or the problem of increasing the probability of rupturing the optical fiber.

However, handling the fiber Bragg grating as the optical fiber sensor involves the following problems:

(1) When the fiber Bragg grating part is directly pasted to a material such as metal, the range of elastic deformation is dominated by the metal content that is on the order of 0.3%, making it impossible to use the high elastic area of the optical fiber that is no less than 4%.

(2) It is not possible to freely select the sensitivity and resolution of a physical quantity such as weight, displacement, pressure and acceleration.

(3) An effect due to temperature is a problem in measuring the physical quantity so that it will become a noise factor in measuring a physical quantity.

Summary of the Invention

It is an object of the present invention to provide an optical fiber sensor using a fiber grating capable of detecting a physical quantity such as displacement, weight, pressure and acceleration with high accuracy and high sensitivity by using the high elasticity of the optical fiber.

It is another object of the present invention to provide an optical fiber sensor using a fiber Bragg grating capable of freely selecting the sensitivity and resolution of a physical quantity.

It is another object of the present invention to provide an optical fiber sensor using a fiber Bragg grating capable of compensating temperature.

In order to attain the above objects, the present invention provides an optical fiber sensor comprising an optical fiber, a first fiber Bragg grating written in the optical fiber, a pair of fixtures fixed to the optical fiber on both sides of the first fiber Bragg grating, which are fixed to an object to be measured, characterized in that displacement, weight, pressure or acceleration applied to the object to be measured is output as an amount of shift of the wavelength of one of the reflected light or transmitted light through expansion/contraction of the first fiber Bragg grating above.

Brief Description of the Drawings

Fig. 1 is a view showing an outlined configuration of an optical fiber sensor according to a first embodiment of the present invention;
Fig. 2 is a view showing an outlined configuration of an optical fiber sensor according to a second embodiment of the present invention;
Fig. 3 is a view showing an outlined configuration of an optical fiber sensor according to a third embodiment of the present invention;
Fig. 4 is a view showing an outlined configuration of an optical fiber sensor according to a fourth embodiment of the present invention;
Fig. 5 is a view showing an outlined configuration of a fifth embodiment of the present invention;
Fig. 6 is a view showing an outlined configuration of a sixth embodiment of the present invention;
Fig. 7 is a view showing an outlined configuration of a seventh embodiment of the present invention;
Fig. 8 is a view showing an outlined configuration of an eighth embodiment of the present invention;
Fig. 9 is a view showing a relationship between an amount of displacement and an amount of shift of a reflected wavelength in the fifth embodiment of the present invention;
Fig. 10 is a view showing a temperature compensation effect of an amount of displacement in the eighth embodiment shown in Fig. 8;
Fig. 11 is a view showing an outlined configuration of an optical fiber sensor according to a ninth embodiment of the present invention;
Fig. 12 is a view showing an outlined configuration of an optical fiber sensor according to a tenth embodiment of the present invention;
Fig. 13 is a view showing an outlined configuration of an optical fiber sensor according to an eleventh embodiment of the present invention;
Fig. 14 is a view to explain a principle of an optical fiber sensor with a temperature compensation function;
Fig. 15A, 15B and 15C are a plan view, front view and side view of an optical fiber sensor with a temperature compensation function according to a twelfth embodiment of the present invention respectively, and Fig. 15D is an enlarged view of a fixed part of a protrusion and a holder shown in Fig. 15B; and
Fig. 16 is a partial cross-sectional view showing an outlined configuration of a conventional fiber type detection element.

Description of the Preferred Embodiments

With reference now to the attached drawings, embodiments of the present invention will be explained in detail below.

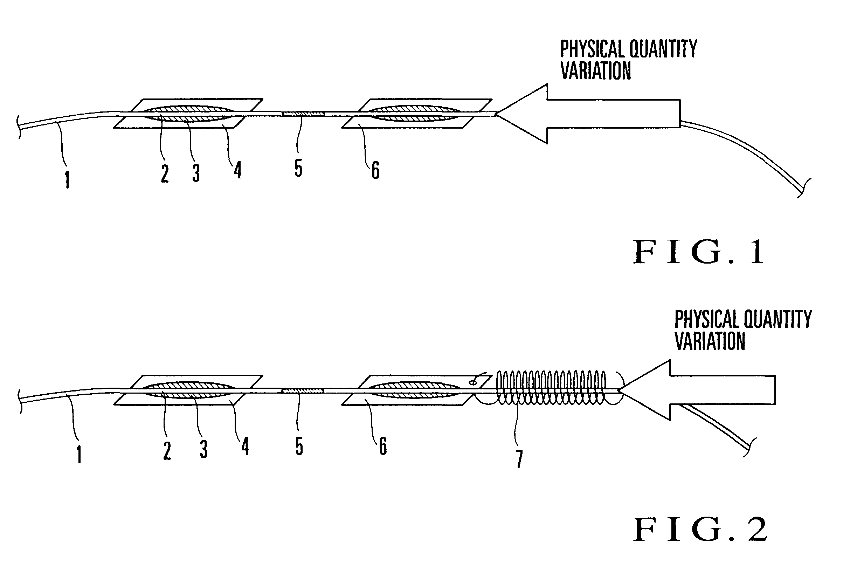

Fig. 1 shows an outlined configuration of an optical fiber sensor according to a first embodiment of the present invention. An optical fiber 1 in which a fiber Bragg grating 5 is written is coated with resin 2, which protects the optical fiber 1. The optical fiber 1 is adhered to fiber fixtures 4 and 6 as flat boards on both sides of the fiber Bragg grating (hereafter fiber grating) 5 via the resin 2 using an elastic adhesive 3, and the fixtures 4 and 6 are directly fixed to an object to be measured.
It is also possible to fix the optical fiber 1 to the fixtures 4 and 6 using the resin 2 instead of the elastic adhesive 3. Furthermore, it is also possible to use clamp fixing instead of the elastic adhesive 3. Furthermore, it is also possible to coat the optical fiber 1 with electroless plating or electrolytic plating at both ends of the fiber Bragg grating 5 instead of the resin 2. In this case, the optical fiber 1 can also be fixed to the fixtures 4 and 6 with electroless plating or electrolytic plating.
This makes it possible to measure a physical quantity such as displacement, weight, pressure and acceleration applied to an object to be measured through an amount of expansion/contraction of the fiber Bragg grating 5 as an amount of wavelength shift of the bragg reflected light from the fiber grating 5 or a peak variatio in the spectral dip of the light passing through the fiber Bragg grating 5, that is, an amount of wavelength shift. Since the part of the fiber grating 5 is not adhered to the fixtures 4 and 6, it is possible to directly use the high elasticity area of the optical fiber 1, which is no less than 4%, allowing detection with high sensitivity and high resolution.
Suppose the strain of the fiber grating 5 is $\delta\varepsilon$, an amount of shift of a peak wavelength of the reflected light from the fiber Bragg grating 5 (or peak wavelength of the spectral dip of the light passing through the fiber Bragg grating 5) is $\delta\lambda$, then expression (1) is established. $\omega$ is a constant related to the structure, etc. of the fiber Bragg grating 5 and is a wavelength- strain coefficient.

$$\delta\lambda = \omega^*\delta\varepsilon \tag{1}$$

On the other hand, suppose the elastic modulus of the optical fiber in which the fiber Bragg grating 5 is written is k1, the distance between the fixtures on both sides of the fiber Bragg grating 5 (hereinafter referred to as "fixture distance") is x1, an amount of expansion/contraction of the distance between the fixtures x1 (substantially the amount of expansion/contraction of the optical fiber) is $\delta$x1, an amount of variation of force F0 applied to the object to be measured such as weight, pressure and acceleration is $\delta$F0, then expression (2) and expression (3) are established.

$$\delta x1 = x1^*\delta\varepsilon \tag{2}$$

$$\delta F0 = k1^*\delta x1 \tag{3}$$

Since the wavelength- strain coefficient $\omega$ is known, if the amount of shift $\delta\lambda$ is detected, the strain $\delta\varepsilon$ is calculated from expression (1) by detecting the amount of shift $\delta\lambda$. From the calculated strain bE and the selected distance between the fixtures x1, the amount of expansion/contraction (amount of displacement/change from the object to be measured) $\delta$x1 is calculated by using expression (2). From the amount of expansion/contraction $\delta$x1 calculated and known elastic modulus k1, the amount of variation $\delta$F0 is obtained by using expression (3).

Here, it is possible to selectively determine the resolution and detection width of the amount of displacement of the object to be measured by adjusting the distance between the fixtures x1. Suppose the wavelength resolution is $\Delta\delta\lambda$, strain resolution is $\Delta\delta\varepsilon$, displacement resolution of the amount of expansion/contraction $\delta$x1 is $\Delta\delta$x1, then expressions (4) and (5) are established.

$$\Delta\delta\lambda = \omega^*\Delta\delta\varepsilon \tag{4}$$

$$\Delta\delta x1 = x1^*\Delta\delta\varepsilon = x1^*1/\omega^*\Delta\delta\lambda \tag{5}$$

The wavelength resolution $\Delta\delta\lambda$ is determined by the performance of the measuring instrument and since the wavelength- strain constant $\omega$ and elastic modulus k1 are known, it is understood that the displacement resolution $\Delta\delta$x1 decreases as the distance between the fixtures x1 decreases.

Furthermore, regarding the detection width, suppose the wavelength detection width is $\delta_{MAX}\lambda$, strain detection width is $\delta_{MAX}\varepsilon$, displacement detection width of $\delta$x1 is $\delta_{MAX}$x1, then expressions (6) and (7) are established.

$$\delta_{MAX}\lambda = \omega^*\delta_{MAX}\varepsilon \tag{6}$$

$$\delta_{MAX}x1 = x1^*\delta_{MAX}\varepsilon = x1^*1/\omega^*\delta_{MAX}\lambda \tag{7}$$

Since the wavelength- strain constant $\omega$ is known, it is understood that the greater the distance between the fixtures x1 and wavelength detection width $\delta_{MAX}\lambda$, the greater the displacement detection width $\Delta\delta_{MAX}$x1 is. That is, it is understood that it is possible to freely select the resolution and detection width of the amount of displacement of an object to be measured by adjusting the fixture distance x1.

Regarding resin, thermo-setting type polyimide resin is used, for example. Using polyimide resin can improve thermal resistance and abrasion resistance and this resin shows high tensile strength and high elasticity compared to other resin. Furthermore, using thermo-setting type fluororesin, phenol resin can improve chemical resistance and watertightness. It is also possible to use 2-liquid mixed room temperature setting type epoxy resin or polyester resin. These are excellent in long-term stability.

Fig. 2 shows an outlined configuration of an optical fiber sensor according to a second embodiment of the present invention. The same components as those in the first embodiment in Fig. 1 are assigned the same reference numerals. The second embodiment differs from the first embodiment in that the fixture 6 is not directly fixed to an object to be measured, but indirectly fixed to the object via a spring 7.

Suppose the elastic modulus of the optical fiber, that is, the fiber Bragg grating 5 is k1, the spring modulus of the spring 7 is k2 (selectable), the amount of displacement of the object to be measured is $\delta x0$, the amount of expansion/contraction (more specifically, amount of expansion/contraction of fixture distance x1) of the optical fiber, that is, fiber Bragg grating 5 is $\delta x1$, the amount of expansion/contraction of the spring is $\delta x2$, the amount of variation of force F0 such as weight, pressure and acceleration applied to the object to be measured is $\delta F0$, then the following expressions are established:

$$\delta\lambda = \omega^*\delta\varepsilon \tag{1}$$

$$\delta x1 = x1^*\delta\varepsilon \tag{2}$$

$$\delta F0 = k1^*\delta x1 = k2^*\delta x2 \tag{8}$$

$$\delta x0 = \delta x1 + \delta x2 \tag{9}$$

As described above, from the amount of expansion/contraction $\delta x1$ calculated from expression (1) and expression (2), the known elastic modulus k1 and the selected spring modulus k2, the amount of variation of force $\delta F0$ and amount of expansion/contraction $\delta x2$ are calculated by using expression (8). Furthermore, from the calculated amounts of expansion/contraction $\delta x1$, $\delta x2$, the amount of displacement $\delta x0$ is calculated by using expression (9).

In the case of the first embodiment, when the fixture distance x1 is selected, the resolution $\Delta\delta x1$ and detection width $\delta_{MAX}x1$ are determined. Here, it is possible to select a spring modulus k2 and selectively determine the resolution$\Delta\delta x0$ of the displacement and detection width $\delta_{MAX}x0$ of the object to be measured. That is, suppose strain resolution is $\Delta\delta\varepsilon$, resolution of the amount of expansion/contraction of $\delta x1$ and $\delta x2$ is $\Delta\delta x1$ and $\Delta\delta x2$, then the displacement resolution $\Delta\delta x0$ of the object to be measured is as follows:

$$\Delta\delta\lambda = \omega^*\Delta\delta\varepsilon \tag{4}$$

$$\Delta\delta x1 = x1^*1/\omega^*\Delta\delta\lambda \tag{5}$$

$$\Delta\delta x0 = (1+k1/k2)^*x1^*1/\omega^*\Delta\delta\lambda \tag{10}$$

Since the wavelength resolution $\Delta\delta\lambda$, wavelengthstrain constant $\omega$ and elastic modulus k1 of the optical fiber are known, it is possible to reduce $\Delta\delta x0$ by increasing the spring modulus k2 without changing the fixture distance x1.

On the other hand, regarding the detection width, suppose the wavelength detection width is $\delta_{MAX}\lambda$, strain detection width is $\delta_{MAX}\varepsilon$, displacement detection widths of $\delta x1$ and $\delta x2$ are $\delta_{MAX}x1$ and $\delta_{MAX}x2$, then the displacement detection width$\delta_{MAX}x0$ of the object to be measured is as follows:

$$\delta_{MAX}\lambda = \omega^*\delta_{MAX}\varepsilon \tag{6}$$

$$\delta_{MAX}x0 = (1+k1/k2)^*x1^*1/\omega^*\delta_{MAX}\lambda \tag{11}$$

Since the wavelength- strain constant $\omega$ is known, it is understood that if the wavelength detection width $\delta_{MAX}\lambda$ is increased and/or the spring modulus k2 is decreased without changing the fixture distance x1, the displacement detection width $\delta_{MAX}x0$ increases. Therefore, selecting the spring constant k2 makes it possible to freely select the resolution and detection width of the amount of displacement.

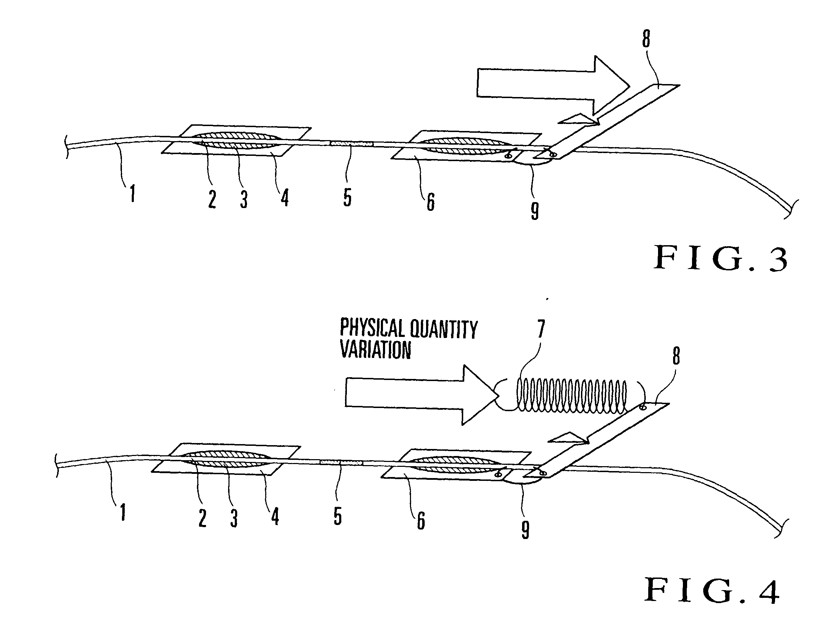

Fig. 3 shows an outlined configuration of an optical fiber sensor according to a third embodiment of the present invention. The third embodiment differs from the first embodiment in that the fixture 6 is not directly fixed to an object to be measured, but indirectly fixed to the object via a lever 8. Reference numeral 9 is a link that connects the lever 8 and fixture 6.

Suppose an amount of variation of force F1 applied to the fiber Bragg grating 5 is $\delta F1$, strain is $\delta\varepsilon$, wavelengthstrain coefficient is $\omega$, the length from the fulcrum of the lever 8 to the fixture 6 is 11, the amount of variation of force F0' by the weight, pressure and acceleration applied to the object to be measured, that is , the point of application is $\delta F0'$, the length from the fulcrum of the lever 8 to the point of application is 12, the amount of expansion/contraction of the fiber Bragg grating is $\delta x1$, the amount of displacement of the object to be measured is $\delta x0'$, then the following relation is established:

$$\delta\lambda = \omega^*\delta\varepsilon \tag{1}$$

$$\delta x1 = x1^*\delta\varepsilon \tag{2}$$

$$\delta F1 = k1^*\delta x1 \tag{12}$$

$$\delta F0'^*12 = \delta F1^*11 \tag{13}$$

$$\delta x0'/12 = \delta x1/11 \tag{14}$$

As described above, the amount of variation of force $\delta F1$ is calculated from the amount of expansion/contraction $\delta x1$ calculated from expression (1) and expression (2) and the known elastic modulus k1 by using expression (12). The amount of variation of force $\delta F0'$ is calculated from the calculated amount of variation of force $\delta F1$ and the selected lever ratio l1/l2 by using expression (13). Moreover, the amount of displacement $\delta x0'$ of the object to be measured from the calculated amount of expansion/contraction $\delta x1$ and the selected lever ratio 11/12 by using expression (14).

That is,

$$\delta F1 = k1^*x1/\omega^*\delta\lambda \tag{15}$$

$$\delta F0' = 11/12^*\delta F1 \tag{16}$$

$$\delta x0' = 1/\{(11/12)^*k1\}^*\delta F1 \tag{17}$$

Here, suppose the resolution of the amount of variation$\delta\lambda$ of a bragg wavelength is $\Delta\delta\lambda$ and the resolution of the amount of variation of force $\delta F1$ is $\Delta\delta F1$, then the following relationship is established between the resolution $\Delta\delta x0'$ of the amount of displacement $\delta x0'$ and the resolution $\Delta\delta F0'$ of force $\delta F0'$ :

$$\Delta\delta F1 = k1^*x1/\omega^*\Delta\delta\lambda \tag{18}$$

$$\Delta\delta F0' = 11/12^*\Delta\delta F1 \tag{19}$$

$$\Delta\delta x0' = 1/\{(11/12)^*k1\}^*\Delta\delta F1 \tag{20}$$

From expression (18) to expression (20), it is understood that as the lever ratio 11/12 increases, the resolution

$\Delta\delta x0'$ improves, and as the lever ratio 11/12 reduces, the resolution $\Delta\delta F0'$ improves.

Furthermore, regarding a detection width, suppose the wavelength detection width is $\delta_{MAX}\lambda$, the weight detection width of force $\delta F1$ is $\delta_{MAX}F1$, then the following relationship is established between the detection width $\delta_{MAX}x0'$ of the amount of displacement $\delta x0'$ and the detection width $\delta_{MAX}F0'$ of force $\delta F0'$:

$$\delta_{MAX}F1 = k1^*x1/\omega^*\delta_{MAX}\lambda \qquad (21)$$

$$\delta_{MAX}F0' = 11/12^*\delta_{MAX}F1 \qquad (22)$$

$$\delta_{MAX}x0' = 1/\{(11/12)^*k1\}^*\delta_{MAX}F1 \qquad (23)$$

From expression (21) to expression (23), it is understood that as the lever ratio 11/12 and $\delta_{MAX}\lambda$ increase, the detection width $\delta_{MAX}F0'$ increases, and as the lever ratio 11/12 decreases and/or $\delta_{MAX}\lambda$ increases, the detection width $\delta_{MAX}x0'$ increases. Thus, it is possible to freely select the resolution and the detection width of a physical quantity such as displacement, weight, pressure and acceleration by selecting the lever ratio 11/12.

Furthermore, from expression (14), even if displacement $\delta x0'$ is considerably large or small, selecting the lever ratio 11/12 makes it possible to expand/contract the amount of expansion/contraction $\delta x1$. Because of this, it is possible to expand the measurement range of displacement $\delta x0'$ through measurement of the amount of expansion/contraction $\delta x1$. That is, selecting the lever ratio 11/12 can adjust the sensitivity.

Fig. 4 shows an outlined configuration of an optical fiber sensor according to a fourth embodiment of the present invention. The fourth embodiment is implemented by adding a lever to the second embodiment, in other words, by adding a spring to the third embodiment. That is, the fixture 6 is not directly fixed to an object to be measured, but indirectly fixed to the object via the lever 8 and spring 7. The lever 8 and fixture 6 are connected by a link 9.

Suppose a force applied to the fiber Bragg grating 5 is F1, the length from the fulcrum of the lever to the fixture 6 is 11, the length from the fulcrum of the lever to the point of application (point of connection with the spring 7) of the force F0' is 12, an amount of expansion/contraction of the fiber Bragg grating 5 is $\delta x1$ and an amount of displacement of the object to be measured is $\delta x0''$, then the following relationship is established:

$$\delta\lambda = \omega^*\delta\varepsilon \qquad (1)$$

$$\delta x1 = x1^*\delta\varepsilon \qquad (2)$$

$$\delta F1 = k1^*\delta x1 \qquad (12)$$

$$\delta F0'^*12 = \delta F1^*11 \qquad (13)$$

$$\delta F0' = k2^*\delta x0'' \qquad (24)$$

As described above, the amount of variation $\delta F0'$ can be calculated by using expressions (1), (2), (12) and (13). From the calculated amount of variation of force $\delta F0'$ and spring constant k2, the amount of displacement $\delta x0''$ is calculated by using expression (24).

Furthermore, the following relationship is established between the resolution $\Delta\delta x1$ of the amount of expansion/contraction $\delta x1$, the resolution $\Delta\delta x0''$ of the amount of displacement $\delta x0''$ and the resolution $\Delta\delta\lambda$ of the amount of wavelength shift $\delta\lambda$ and the resolution $\Delta\delta F1$ and $\Delta\delta F0'$ of the amounts of variation of force $\delta F1$ and $\delta F0'$:

$$\Delta\delta\lambda = \omega^*\Delta\delta\varepsilon \qquad (4)$$

$$\Delta\delta x1 = x1^*\Delta\delta\varepsilon = x1^*1/\omega^*\Delta\delta\lambda \qquad (5)$$

$$\Delta\delta F1 = k1^*x1/\omega^*\Delta\delta\lambda \qquad (18)$$

$$\Delta\delta F0' = 11/12^*\Delta\delta F1 \qquad (19)$$

$$\Delta\delta x0'' = 1/k2^*\Delta\delta F0' \qquad (25)$$

From expression (19), it is understood that the resolution $\Delta\delta F0'$ improves as the lever ratio 11/12 decreases and from expression (25), it is understood that the resolution $\Delta\delta x0''$ improves as the spring constant k2 increases.

On the other hand, regarding the detection width, suppose the wavelength detection width is $\delta_{MAX}\lambda$, weight detection width of $\delta F1$ is $\delta_{MAX}F1$, then the following relationship is established between detection width $\delta_{MAX}x0''$ of an amount of displacement $\delta x0''$ and detection width $\delta_{MAX}F0'$ of force $\delta F0'$:

$$\delta_{MAX}F1 = k1^*x1/\omega^*\delta_{MAX}\lambda \qquad (26)$$

$$\delta_{MAX}F0' = 11/12^*\delta_{MAX}F1 \qquad (27)$$

$$\delta_{MAX}x0'' = 1/k2^*\delta_{MAX}F0' \qquad (28)$$

From expression (26) to expression (28), it is understood that detection width $\delta_{MAX}F0'$ increases as the lever ratio 11/12 and/or $\delta_{MAX}\lambda$ increases, and the detection width $\delta_{MAX}F0'$ increases as the spring constant k2 decreases. Thus, selecting the spring constant k2 and lever ratio 11/12 makes it possible to freely select the resolution and detection width of a physical quantity such as displacement, weight, pressure, acceleration, etc.

Furthermore, from expressions (12), (13) and (24),

$$\delta x0'' = (k1/k2)^*(11/12)^* \delta x1 \qquad (29)$$

and therefore it is possible to expand/contract an amount of expansion/contraction $\delta x1$ by selecting the spring constant k2 and lever ratio 11/12 even if the amount of displacement $\delta x0''$ is considerably large or considerably small. For this reason, it is possible to expand the range of measurement of displacement $\delta x0''$ by means of measuring the amount of expansion/contraction $\delta x1$. That is, it is possible to adjust sensitivity by selecting the spring constant k2 and lever ratio 11/12.

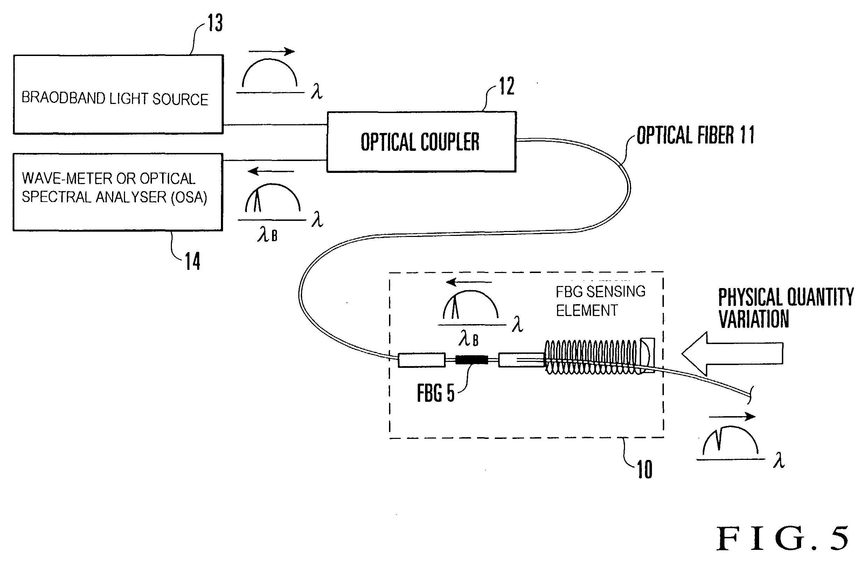

Fig. 5 shows an outlined configuration of a fifth embodiment of the present invention. This embodiment shows an example of a system applying the optical fiber sensor shown in Fig. 2 to an FBG wavelength shift detection apparatus using a broadbandlight source and a wavelength detector. The FBG sensing element 10 configured by the optical fiber sensor (substantially a strain detection section) shown in Fig. 2 is connected to an optical fiber 11 and further connected via an optical coupler 12 to a broadbandlight source 13 made up of a light-emitting diode, etc. and a wave-meter or optical spectral analyzer (OSA) 14 made up of an optical spectrum analyzer.

The light emitted from the broadbandlight source 13 is led through the optical coupler 12 and optical fiber 11 to the FBG sensing element 10. The light emitted from the broadband light source 13 contains light beams with wavelengths covering a wide band, but normally the reflected light of a wavelength $\lambda B$ is detected through the optical coupler 12 by the wave-meter or optical spectral analyser (OSA) 14. This is because the fiber Bragg grating 5 at the FBG sensing element 10 only bragg-reflects the light of a specific wavelength $\lambda B$ determined by the grating period, index of refraction, etc. On the other hand, the incident light to the optical fiber behind the FBG sensing element 10 has a dip at the position of the wavelength $\lambda B$.

The FBG sensing element 10 is fixed to an object to be measured as described above and when a physical quantity such as displacement, weight, pressure and acceleration changes, displacement occurs in the fiber Bragg grating 5, changing the wavelength of the reflected light from $\lambda B$ to $\lambda B'$. At this time, the dip position of the incident light to the optical fiber cable behind also changes to λB'. Measuring the amount of this shift of wavelength δλ =λB'-λB makes it possible to measure displacement of the fiber Bragg grating 5, amount of displacement δx0 and a amount of variation of force δF0 such as weight, pressure or acceleration applied to the object to be measured.

Furthermore, as described above, selecting the spring constant k2 and/or lever ratio 11/12 as appropriate makes it possible to freely select the resolution and detection width of a physical quantity such as displacement, weight, pressure, and acceleration. Moreover, even if displacement δx0 is large, it is possible to reduce the amount of expansion/contraction δx1 to be measured by selecting the spring constant k2, and thus it is possible to expand the range of measurement of the amount of displacement δx0. It is also possible to use an optical circulator instead of the optical coupler 12.

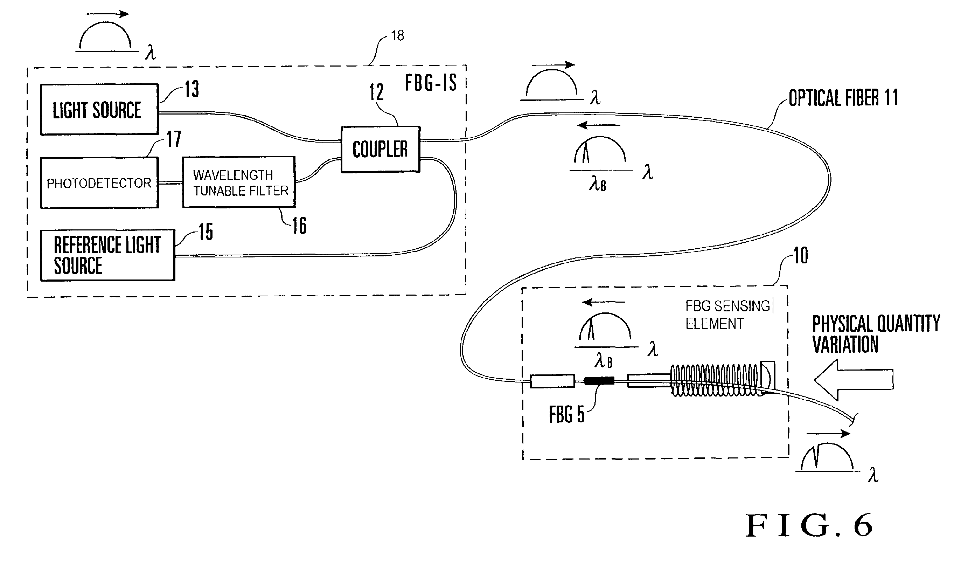

Fig. 6 shows an outlined configuration according to a sixth embodiment of the present invention. The sixth embodiment shows an example of applying an optical fiber sensor to a wavelength tracking system, "Fiber Bragg Grating Interrogation System (FBG-IS)". This embodiment differs from the fifth embodiment in that a light source system and light detection system are systematized in FBG-IS 18.

The light emitted from a broadband light source 13 is introduced through a coupler 12 and optical fiber 11 to an FBG detection section (optical fiber sensor in Fig. 2) 10 as in the case of Fig. 5 and the reflected light is detected via a wavelength tunable filter 16 of the light detection system by a photodetector 17. A reference light source 15 is used to correct a peak of a spectrum of the light reflected by the FBG sensing element 10, that is, value of Bragg wavelength, light of a plurality of wavelengths corrected with accuracy on the order of 1 pm is emitted from the reference light source 15.

The light detection system switches between the light from this reference light source 15 and the reflected light from the FBG sensing element 10 that detects variations in a physical amount and detects wavelengths with high accuracy. The wavelength of the light detected by the wavelength tunable filter 16 in the light detection system normally fluctuates due to drift of the detected wavelength and disturbance of temperature, etc. but this reference light allows the wavelength to be corrected. Because of this, this embodiment allows more stable and accurate measurements than the fifth embodiment.

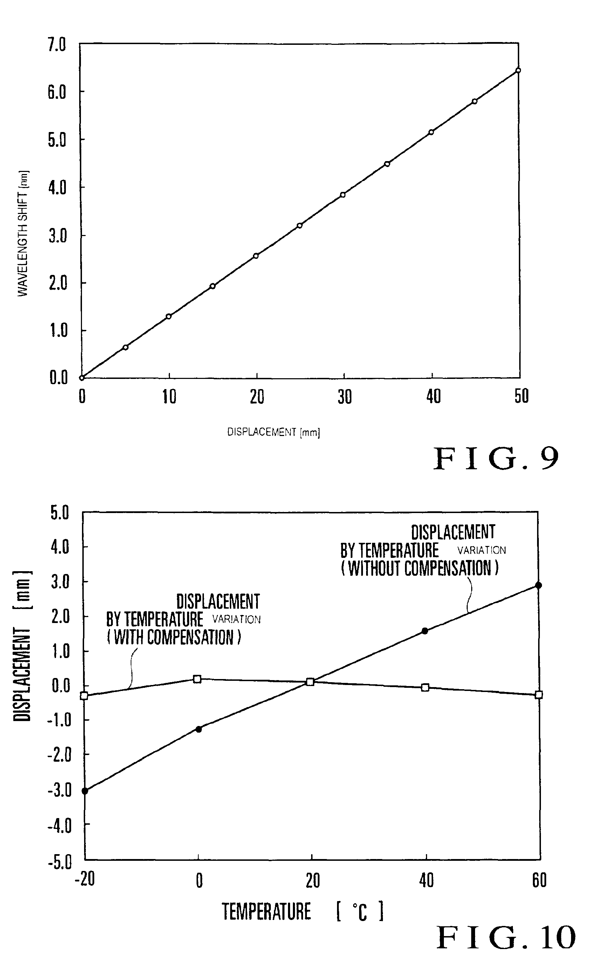

Fig. 9 shows a relationship between the amount of displacement δx0 and amount of wavelength shift of the reflected light δλ measured by the fifth embodiment. It is apparent that the amount of wavelength shift of the reflected light δλ varies linearly with respect to the amount of displacement δx0. Furthermore, for the amount of displacement δx0, a wide range of measurement of 0 to 50 mm is possible. These measured values are temperature-compensated.

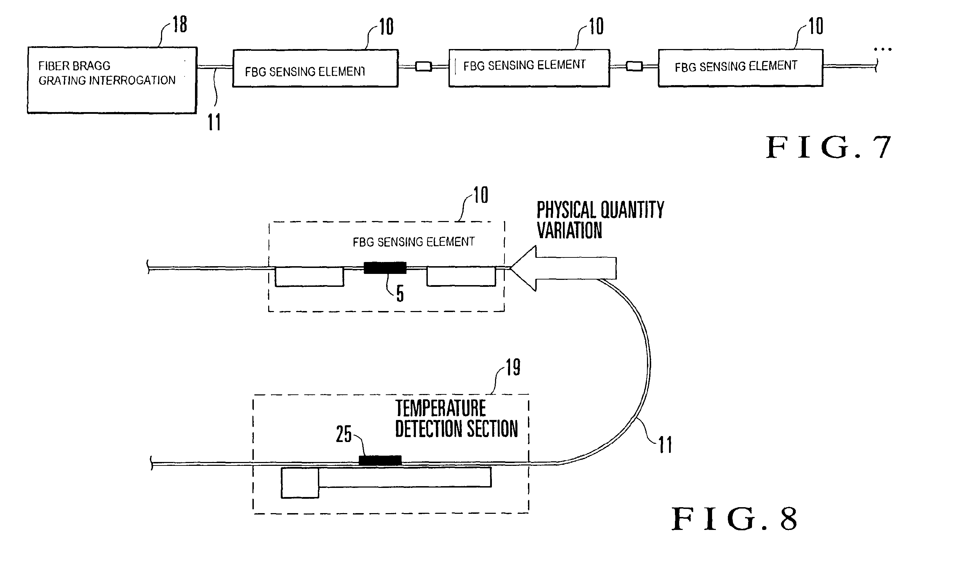

Fig. 7 shows an outlined configuration according to a seventh embodiment of the present invention. The seventh embodiment comprises a plurality of FBG sensing elements 10 functioning as strain detection sections in which the fiber Bragg gratings 5 with different wavelengths of reflected light are written connected in series via an optical fiber 11 by means of fusion splicing, optical connector connection or mechanical splicing. Fig. 7 shows the case where a wavelength tracking system 108 made up of the FBG-IS explained in the sixth embodiment is applied to the light source and light detection system, but since the wavelength of the reflected light from each FBG detection section 10 forming the optical fiber sensor varies from one FBG detection section to another, allowing an optical measurement system made up of a single light source and single wavelength detector to detect at a plurality of FBG sensing elements 10. Furthermore, using FBG sensing elements 10 connected in series allows measurements from a plurality of sites simultaneously.

By the way, optical fiber sensors connected in series similar to this embodiment can also be created by writing fiber Bragg gratings 5 with different wavelengths of reflected light at a plurality of locations of a single optical fiber.

Fig. 8 shows an outlined configuration according to an eighth embodiment of the present invention. The eighth embodiment is implemented by adding a temperature compensation optical fiber sensor (FBG temperature detection section) 19 to the fifth embodiment containing the wave-meter or optical spectral analyzer (OSA) to enable temperature compensation. The temperature compensation optical fiber sensor 19 used is the one in which a fiber Bragg grating 25 is written with wavelength λT of reflected light different from that of the strain detection fiber Bragg grating 5 and is connected in series to a strain detection optical fiber sensor (FBG sensing element) 10 via an optical fiber 11.

Having a different reflected wavelength, the wave-meter or optical spectral analyser (OSA) 14 (Fig.5) can detect an amount of wavelength shift δλ of the FBG sensing element 10, an amount of wavelength shift δλT*δT of the temperature detection section 19 (δλT is an amount of wavelength shift per unit temperature, δT is a temperature variation) independently. The FBG temperature detection section 19 has one end pasted and fixed to a material whose coefficient thermal linear expansion is known in such a way that it is never affected by changes in a physical quantity such as displacement, weight, pressure, acceleration and can detect only expansion/contraction by a temperature.

It is possible to calculate a true amount of variation of reflected light δΛ independent of a temperature by theoretically subtracting the amount of wavelength shift δλT*δT of the temperature detection section 19 from the amount of wavelength shift δλ of the FBG detection section 10 detected by the wavelength detector. Suppose the coefficient of linear expansion of the material at the temperature detection section 19 is αB and the amount of wavelength variation per unit temperature corresponding to the variation of the index of refraction by temperature of the fiber grating is An,

**EP 1 124 112 A2**

then the relationship between δλ, δλT and δΛ is expressed in expressions (30) and (31).

$$\delta\lambda T/\delta T = \alpha B^* \omega + \lambda n \tag{30}$$

$$\delta\Lambda = \delta\lambda - \delta\lambda T^* \delta T \tag{31}$$

This embodiment describes an example of application to the fifth embodiment, but temperature compensation is also applicable to other embodiments. In a system in which a plurality of FBG sensing elements 10 are connected in series, too, even one temperature detection section 19 suffices if the fiber Bragg gratings 5 with different reflected wavelengths are used.

Fig. 10 shows a temperature compensation effect with an amount of displacement δx0 measured by using this embodiment. In Fig. 10, an amount of displacement without temperature compensation (black circle) and an amount of displacement with temperature compensation (white squares) are shown. It is understood that with 20°C as a reference point, large displacement of approximately 3 mm at -20°C and 60°C is compensated to approximately 0.3 mm.

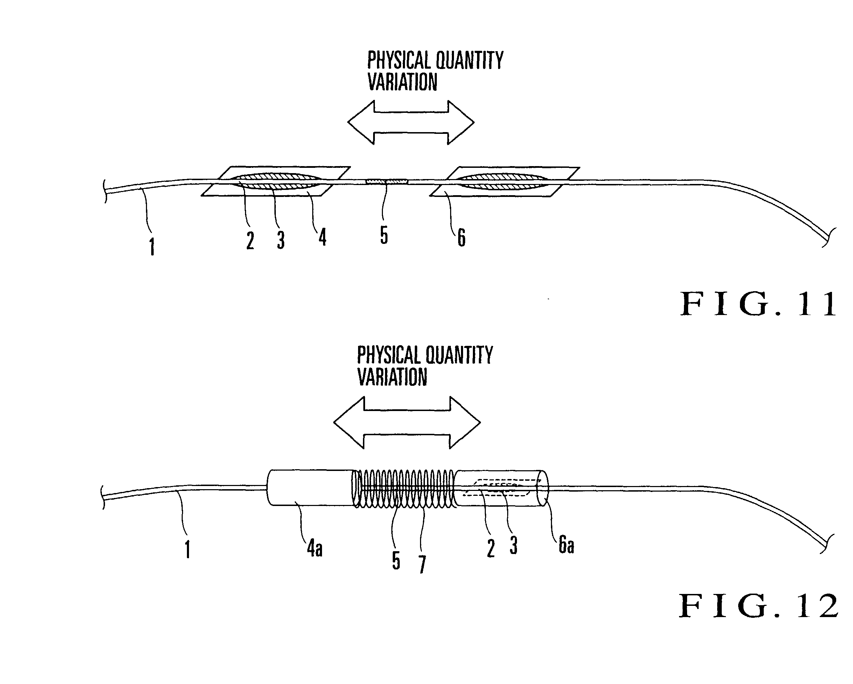

Fig. 11 shows an outlined configuration of an optical fiber sensor according to a ninth embodiment of the present invention. The first to eighth embodiments describe the cases where variations in a physical quantity occur in an object to be measured in a certain direction, but this embodiment shows a case where an optical fiber sensor is applied to an object to be measured in which variations in a physical quantity occur in two directions. In this embodiment, as in the case of the first embodiment, an optical fiber 1 is adhered to a pair of fixtures 4 and 6 using an elastic adhesive 3 on both sides of the optical fiber 1 in which the fiber Bragg grating 5 is written.

Fig. 12 shows an outlined configuration of an optical fiber sensor according to a tenth embodiment of the present invention. This embodiment differs from the second embodiment in that variations in a physical quantity occur in an object to be measured in two directions, a pair of fixtures 4a and 6a are cylinder-shaped and a spring 7 is inserted between the fixtures 4a and 6a. The optical fiber 1 is placed on the fixtures 4a and 6a and on the central axis of the spring 7.

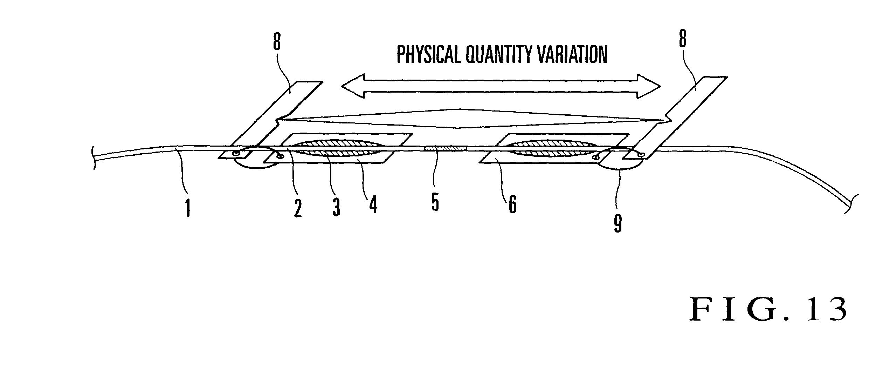

Fig. 13 shows an outlined configuration of an optical fiber sensor according to an eleventh embodiment of the present invention. This embodiment differs from the third embodiment in that variations in a physical quantity occur in an object to be measured in two directions and levers 8 are connected to both fixtures 4 and 6 via a link 9.

The eighth embodiment requires an FBG temperature detection section besides the PBG detection section, but it is also possible to provide a temperature compensation function for the optical fiber sensor itself.

First, the principle of the optical fiber sensor with a temperature compensation function will be explained. As a method for measuring strain in structures at civil engineering or construction sites, a strain gauge or strain meter based on a strain gauge is used. Main strain that occurs in a structure is:

1) strain according to Hooke's law involved in a stress variation of the structure by an external force (hereinafter referred to as "effective strain "),
2) strain according to a liner expansion coefficient of a structure material involved in a temperature variation (hereinafter referred to as "apparent strain "), and these two kinds of strain act on a strain gauge or strain meter set in the structure in most cases.

Here, for the purpose of knowing stress (external force) of a structure, effective strain must be calculated. Therefore, it is necessary to:

I. Reduce the sensitivity of apparent strain of the strain gauge or strain meter (hereinafter referred to as "temperature compensation method")
II. Separate and subtract apparent strain from measured values of the strain gauge and strain meter (hereinafter referred to as "temperature testing method").

One of these methods is a temperature compensation method. The temperature compensation method is a method of making an output value of the strain gauge or strain meter itself caused by a temperature variation almost the same as the amount of strain involved in free expansion of the object to be measured caused by a temperature variation (self temperature compensation gauge, temperature compensation type strain meter). The temperature compensation method using a free end will be detailed below.

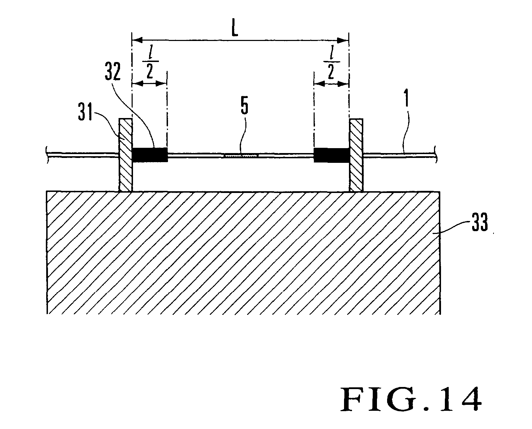

As shown in Fig. 14, in a strain meter using an FBG in which a pair of holders 31 having the same liner expansion coefficient as that of a structure 33 are connected to the structure 33 in a distance L and an FBG optical fiber 1 is connected with certain tension to protrusions 32 of the fixed material 31, suppose L of the structure 33 changes to L+ΔL due to temperature variation. (ΔL: apparent strain ).

Suppose each part has:

Linear expansion coefficient of structure 33 and holder 31: $\alpha(\times 10^{-6}/{}^\circ C)$
Linear expansion coefficient of protrusion 31: $\beta (\times 10^{-6}/{}^\circ C)$
Zero-point drift of FBG (including linear expansion coefficient): $\gamma(\times 10^{-6}/{}^\circ C)$
and the structure 33 is sufficiently rigid with respect to the FBG optical fiber 1.

In such a configuration, if the temperature at which L is expanded to L+ΔL is t(°C) is expressed as:

$$\Delta L/L = \alpha \cdot t \qquad (32)$$

Therefore,

$$AL = \alpha \cdot t \cdot L \qquad (33)$$

On the other hand, a variation of length $\ell$ of each protrusion 32: $\Delta\ell/2$ is:

$$\Delta\ell/2 = \beta \cdot t \cdot \ell /2 \qquad (34)$$

From above, when a temperature variation t(°C) acts on the structure 33, the distance between the protrusions 32 is expanded by:

$$\Delta L - 2 \cdot (\Delta\ell/2) \qquad (35)$$

Here, substituting expressions (33) and (34) into expression (35) results in:

$$\Delta L - 2 \cdot (\Delta\ell/2) = (\alpha L - \beta\ell)t \qquad (36)$$

That is, when the structure 33 expands by ΔL, the FBG optical fiber 1 is given forced displacement by $(\alpha L - \beta\ell)t$. Therefore, temperature compensation of the strain meter requires the following expression to be satisfied:

$$r \cdot t + k \cdot \frac{(\alpha \cdot L - \beta \cdot \lambda)}{L - \lambda} \cdot t = 0 \qquad (37)$$

Here, k in expression (36) is the strain sensitivity of the FBG optical fiber 1 and the unit is $(\times 10^{-6}/1 \times 10^{-6})$. Here, $\alpha$ is known and $\gamma$ and k are calculated from a test. Therefore, it is possible to calculate 1(β) by setting L and using β(1) as a variable.

As an example, by dividing the left side of expression (37) by L, the following expression is obtained:

$$r + k \cdot \frac{(\alpha \cdot \frac{L}{L} - \beta \cdot \frac{\lambda}{L})}{\frac{L}{L} - \frac{\lambda}{L}} = 0 \qquad (38)$$

In expression (38), suppose $\ell/L = S$, then:

$$r + k \cdot \frac{(\alpha - \beta \cdot S)}{1 - S} = 0 \qquad (39)$$

Here, substituting the following values into expression (39) obtains expression (40).

$\alpha$: Structure linear expansion coefficient = 11 ($\times 10^{-6}$) (concrete, iron, etc.)

$\gamma$: FBG zero drift = 8 ($\times 10^{-6}$)

k: strain sensitivity = 1 ($\times 10^{-6}/1 \times 10^{-6}$)

$\beta$: Protrusion linear expansion coefficient = 85 ($\times 10^{-6}$)

(epoxy resin based adhesive, Delrin, etc.)

$$S = \ell/L = 19/93 \tag{40}$$

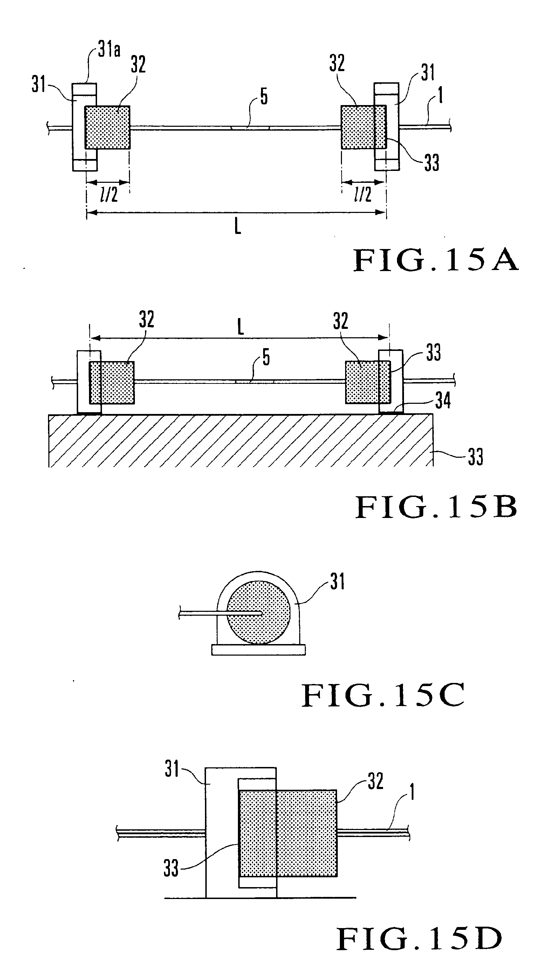

Then, the above-described optical fiber sensor with a temperature compensation function will be explained more specifically. Fig. 15A to 15D show a twelfth embodiment of the present invention.

As shown in Fig. 15A to 15C, a pair of cylindrical protrusions 32 made of acetal resin are adhered and fixed to the corresponding surfaces of a pair of disk-like holders 31 with a flange section 31a using an adhesive 34. An optical fiber 1 penetrates through the center of the holders 31 and protrusions 32 and are fixed. The holders 31 are adhered and fixed to the structure 33 using an adhesive 34 with the optical fiber 1 tensioned between the protrusions 32 with predetermined tension. The distance between the holders 31 is fixed. Between the flange section 31a of the holder 31 and the protrusion 32 is a space taking account of a difference between the linear expansion coefficient of the fixture and the linear expansion coefficient of the protrusion as shown in Fig. 15D.

In such a configuration, the output calculated value E is expressed in expression (41).

$$E = \gamma t + k \cdot \frac{(\alpha \cdot L - \beta \cdot \lambda)}{L - \lambda} \cdot t \tag{41}$$

To reduce the above apparent strain to zero,

$$t = 0, \text{ or } \dots \gamma + k \cdot \frac{(\alpha \cdot L - \beta \cdot \lambda)}{L - \lambda} = 0 \tag{42}$$

Now, because of a condition $t \neq 0$,

$$\gamma + k \cdot \frac{(\alpha \cdot L - \beta \cdot \lambda)}{L - \lambda} = 0 \tag{43}$$

$$\gamma(L - \lambda) + k \cdot (\alpha \cdot L - \beta \cdot \lambda) = 0 \tag{44}$$

$$\lambda \cdot (\gamma + k\beta) = L (y + k \cdot \alpha) \tag{45}$$

$$\lambda = L \cdot \frac{\gamma + k\alpha}{\gamma + k\beta} \tag{46}$$

Length 1 of the protrusion 32 for temperature compensation is expressed by expression (46).

Where:

E: Output calculated value ($\times 10^{-6}/°C$)
$\alpha$: Structure linear expansion coefficient ($\times 10^{-6}/°C$)

For example, Iron: 11.7
Stainless steel (SUS): 17
Aluminum (AL): 23

$\gamma$: FBG zero drift = 8 ($\times 10^{-6}/^{\circ}$C)
k: strain sensitivity = 1 ($\times 10^{-6}/1 \times 10^{-6}$)
$\beta$: Protrusion linear expansion coefficient = 85($\times 10^{-6}/^{\circ}$C) (epoxy resin based adhesive, Delrin)

L = 65 mm

Therefore, by specifying the material of the structure 33, it is possible to calculate the length of the protrusion 32 when the distance between the holders 31 L = 65 mm.

$$\text{Iron } (\alpha = 11.7 \times 10^{-6}/^{\circ}\text{C}):$$

$$\lambda_F = 65 \times \frac{(8 + 11.7)}{8 + 85} \approx 13.8 \tag{47}$$

$$\text{Stainless steel } (\alpha = 17 \times 10^{-6}/^{\circ}\text{C}):$$

$$\lambda_{SUS} = 65 \times \frac{(8 + 17)}{8 + 85} \approx 17.5 \tag{48}$$

$$\text{Aluminum } (\alpha = 23 \times 10^{-6}/^{\circ}\text{C}):$$

$$\lambda_a = 65 \times \frac{(8 + 23)}{8 + 85} \approx 21.7 \tag{49}$$

As described above, the optical fiber sensor with a temperature compensation function can cancel apparent strain by only changing the length of the protrusions 32 according to the material (iron, aluminum, stainless steel, etc.) of the structure 33 whose strain is to be measured.

The condition in that case should be as follows: Since in expression (43), $\gamma$ is positive (FBG zero drift), k is positive ( strain sensitivity), ($\alpha \cdot L - \beta \cdot \ell$) must be negative. Therefore, $\alpha \cdot L < \beta \cdot \ell$.

If the structure 33 is the object to be measured (when the fixture distance L is not fixed), it is possible to compensate temperatures by adjusting the length $\ell$ of the protrusions 32, specifying the length of the fixture distance L and fixing the holders 31 to the object to be measured.

As described above, in the optical fiber sensor according to the present invention, the optical fiber in which a fiber grating is written includes a strain detection section in which the optical fiber on both sides of the fiber grating is fixed by fixtures and the fixtures are directly or indirectly fixed to the object to be measured. Displacement, weight, pressure or acceleration applied to the object to be measured is detected as an amount of shift of wavelength of the reflected light or transmitted light via expansion/contraction of the fiber grating, that is, strain . This makes it possible to accurately detect a physical quantity such as displacement, weight, pressure or acceleration applied to 2 points of the object to be measured taking advantage of a wide elastic area of the optical fiber.

There is nothing that touches the fiber grating and a variation in a physical quantity such as displacement, weight, pressure or acceleration applied to the object to be measured is converted to a variation of expansion/contraction applied to the optical fiber between the fixtures at both ends of the fiber grating and the fiber grating that forms the intermediate section is designed to be distorted uniformly. In this way, the optical fiber is directly strained and the strain amounts to no less than 4%, making it possible to use a wide elastic area.

That is, according to the optical fiber sensor of the present invention, it is possible to detect a physical quantity such as displacement, weight, pressure and acceleration, etc. with high accuracy and high resolution by converting the physical quantity to an amount of expansion/contraction of the fiber grating taking advantage of the high elastic area of no less than 4% of the fiber Bragg grating. Furthermore, it is also possible to freely select and detect the sensitivity and resolution about the physical quantity such as displacement, weight, pressure or acceleration, etc.

Furthermore, the optical sensor of the present invention provides protective coating at least both ends or covering the whole of the fiber Bragg grating with resin beforehand and attaches this coated fiber grating to fixtures. This makes it possible to prevent scars or micro cracks or reduce the probability of rupture before or when mounting the fiber grating. It is desirable to use as resin, thermo-setting polyimide resin, phenol resin, fluororesin or 2-liquid mixed room temperature setting type epoxy resin or polyester resin, which can improve thermal resistance, abrasion resistance, chemical resistance and watertightness etc.

Furthermore, both ends of the fiber Bragg grating are adhered and fixed to the fixtures using an elastic adhesive or directly fixed to the fixtures by means of resin or mechanically clamped. The fixture can be anything whether a flat board, hardware made up of grooved round bar or square bar, part of a mechanism used for a spring, lever, etc. forming a sensor. The present invention is also applicable to a case where the fiber Bragg grating is directly fixed to an object to be measured by regarding part of the object to be measured as a fixture.

Furthermore, the optical fiber sensor of the present invention provides protection at least at both ends or covering the whole of the fiber Bragg grating with electroless plating or electrolytic plating or both. This makes it possible to have effect similar to that of protection with resin. The fiber Bragg grating can also be fixed to the fixtures by means of electroless plating or electrolytic plating.

Furthermore, the optical fiber sensor of the present invention detects displacement, weight, pressure or acceleration applied to the object to be measured as an amount of wavelength shift of reflected light or transmitted light by means of expansion/contraction of the fiber grating and can freely select detection resolution and detection width (scan width of parameters necessary for detection). As one way of this, it is possible to select resolution of the amount of displacement by adjusting the distance between two fixtures at both ends of the fiber grating (that is , adjusting the position of one fixture) and directly fixing the fiber grating to the object to be measured.

Furthermore, the optical fiber sensor of the present invention indirectly fixes one fixture to the object to be measured by inserting a spring and/or lever between the fixture and object and makes it possible to freely select resolution and detection width of a physical quantity such as displacement, weight, pressure or acceleration to be detected by arbitrarily selecting a spring constant and/or lever ratio.

Furthermore, the optical fiber sensor of the present invention comprises a plurality of strain detection sections in which fiber Bragg gratings with different reflected wavelengths are written in the optical fiber, connected in series via the optical fiber. This allows measurements from a plurality of sites to be performed simultaneously or collectively.

Furthermore, the optical fiber sensor of the present invention includes a temperature detection section with the optical fiber in which a fiber Bragg grating with a reflected wavelength different from that of the strain detection section is written directly fixed to the fixture on one end of the fiber Bragg grating and freely fixed to the other end so as to be completely free of influences of changes of displacement, weight, pressure or acceleration and this temperature detection section is connected in series to the strain detection section via the optical fiber. The present invention provides temperature compensation by calculating and subtracting an amount of wavelength shift detected by the temperature detection section from the amount of wavelength shift detected by the strain detection section.

Free fixing means such a condition that the fiber Bragg grating is physically fixed to a fixture, but completely free of influences of changes of displacement, weight, pressure or acceleration. Such a temperature detection section is proposed in the Japanese Patent Laid-Open No. 2000-111319.

Furthermore, the optical fiber sensor of the present invention allows measurements from a plurality of sites to be carried out simultaneously or collectively by using optical fiber sensors connected in series. Furthermore, using an optical fiber sensor capable of temperature compensation provides measurements of true physical quantities independent of temperature.

**Claims**

1. An optical fiber sensor, characterized by comprising:

   an optical fiber (1);
   a first fiber Bragg grating (5) written in said optical fiber; and
   a pair of fixtures (4, 6) fixed to said optical fiber on both sides of said first fiber grating, said fixtures being fixed to an object to be measured, the optical fiber being coated with elastic resin at the fixed portion to said fixtures, in which displacement, weight, pressure or acceleration applied to the object to be measured is output as an amount of wavelength shift of either the reflected light or transmitted light by means of expansion/contraction of said first fiber grating.

2. The optical fiber sensor according to claim 1, characterized in that both of said fixtures are directly fixed to the object to be measured.

3. The optical fiber sensor according to claim 1, characterized in that one of said fixtures is directly fixed to the object to be measured and the other one of said fixtures is indirectly fixed to the object to be measured via at least one of a spring (7) and a lever (8).

4. The optical fiber sensor according to claim 1, characterized in that both of said fixtures are indirectly fixed to the object to be measured via at least one of a spring (7) and a lever (8).

5. The optical fiber sensor according to claim 1, characterized in that a plurality of strain detection sections (10) made up of said first fiber Bragg grating and fixtures are connected in series via said optical fiber, and
    said first fiber Bragy gratings of said strain detection sections have mutually different reflected wavelengths.

6. The optical fiber sensor according to claim 1, characterized by further comprising a temperature detection section (19) connected in series to said strain detection sections (10) made up of said first fiber Bragg grating and fixtures,

    in which said temperature detection section comprises a second fiber Bragg grating (25) written in said optical fiber, having reflected wavelength different from that of said first fiber Bragg grating.
    said optical fiber on one end of said second fiber Bragg grating is directly or indirectly fixed to the object to be measured, and
    said optical fiber on the other end of said second fiber Bragg grating is fixed in a manner completely free of influences from changes in displacement, weight, pressure or acceleration applied to the object to be measured.

7. The optical fiber sensor according to claim 1, characterized in that said optical fiber is coated with resin (2) on both sides of said fiber Bragg grating.

8. The optical fiber sensor according to claim 7, characterized in that the resin coated on said optical fiber is the one selected from thermo-setting polyimide resin, phenol resin, fluororesin or 2-liquid mixed room temperature setting type epoxy resin or polyester resin.

9. The optical fiber sensor according to claim 7, characterized in that said optical fiber is adhered and fixed via resin to said fixtures using an elastic adhesive (3).

10. The optical fiber sensor according to claim 7, characterized in that said optical fiber is fixed to said fixtures using resin (2).

11. The optical fiber sensor according to claim 1, characterized in that said optical fiber is mechanically clamped to said fixtures.

12. The optical fiber sensor according to claim 1, characterized in that said optical fiber is coated with one of electroless plating or electrolytic plating at both ends of said fiber Bragg grating.

13. The optical fiber sensor according to claim 12, characterized in that said optical fiber is fixed to said fixtures with either electroless plating or electrolytic plating.

14. The optical fiber sensor according to claim 1, characterized in that the physical quantity applied to the object to be measured is the one selected from displacement, weight, pressure or acceleration.

15. The optical fiber sensor according to claim 1, characterized by further comprising a pair of protrusions (32) fixed face to face to said fixtures, supporting said optical fiber with predetermined tension,
    in which apparent strain caused by temperature of the object to be measured is canceled by selecting the length of said protrusions according to the material of the object to be measured.

16. The optical fiber sensor according to claim 15, characterized in that when zero drift of said first fiber grating is $\gamma$, strain sensitivity is k, linear expansion coefficient of the object to be measured is $\alpha$, and linear expansion coefficient of said protrusions is $\beta$, then length 1 of said protrusions is expressed as:

$$1 = L \cdot (\gamma + k\alpha)/(\gamma + k\beta)$$

17. An optical fiber sensor, characterized by comprising:

    strain detecting means (10) in which an optical fiber (1) in which a fiber Bragg grating (5) written is fixed to a pair of fixtures (4, 6) on both sides of said fiber Bragg grating, said fixtures being directly or indirectly fixed to an object to be measured; and

wavelength detecting means (14) for detecting displacement, weight, pressure or acceleration applied to said object to be measured as an amount of wavelength shift of either the reflected light or transmitted light by means of expansion/contraction of said fiber Bragg grating.

FIG. 1

PHYSICAL QUANTITY VARIATION

FIG. 2

PHYSICAL QUANTITY VARIATION

FIG. 3

FIG. 4

FIG. 5

EP 1 124 112 A2

F I G . 6

FIG. 7

FIBER BRAGG GRATING INTERROGATION

FBG SENSING ELEMENT

FBG SENSING ELEMENT

FBG SENSING ELEMENT

FBG SENSING ELEMENT

FIG. 8

PHYSICAL QUANTITY VARIATION

FBG SENSING ELEMENT

TEMPERATURE DETECTION SECTION

F I G. 9

F I G. 10

EP 1 124 112 A2

PHYSICAL QUANTITY
VARIATION

F I G. 11

PHYSICAL QUANTITY
VARIATION

F I G. 12

PHYSICAL QUANTITY VARIATION

FIG. 13

FIG.14

FIG.15A

FIG.15B

FIG.15C

FIG.15D

55    51    53

54    52

FIG.16
PRIOR ART